# EUROPEAN PATENT APPLICATION

(11) **EP 4 693 546 A1**
(43) Date of publication of application: **11.02.2026**
(21) Application number: 25163278.2
(22) Date of filing: 12.03.2025
(51) Int. Cl.: H01M 10/04, H01M 50/103, H01M 50/147, H01M 50/15, H01M 50/169, H01M 50/176, H01M 50/30, H01M 50/55, H01M 50/553, H01M 50/627, H01M 50/112, H01M 10/0525

(54) **SECONDARY BATTERY HAVING ONE-CELL MULTI-TERMINAL STRUCTURE AND METHOD OF MANUFACTURING THE SAME**

(30) Priority: 08.08.2024 KR 20240106428
(71) Applicant: SAMSUNG SDI CO., LTD., Yongin-si, Gyeonggi-do 17084 (KR)
(72) Inventor: PARK, Seeun, Yongin-si, Gyeongg-do 17084 (KR)
(74) Representative: Marks & Clerk LLP

(57) **Abstract**

A secondary battery includes a case including a plurality of independent spaces, a plurality of electrode assemblies, each of which is separately accommodated in one of the plurality of independent spaces, and a cap assembly including a cap plate, the cap plate being bonded to each of the plurality of electrode assemblies, wherein the cap assembly includes a plurality of terminals attached to the cap plate, the plurality of terminals electrically connected to the plurality electrode assemblies.

## Description

### BACKGROUND

### 1. Field

The present disclosure relates to a secondary battery and a method of manufacturing the same.

### 2. Description of the Related Art

Secondary batteries are batteries that may be charged and discharged unlike primary batteries that cannot be charged. A secondary battery generally includes an electrode assembly composed of a positive electrode plate, a separator, and a negative electrode plate, a case (or a can) that accommodates the electrode assembly, an external terminal that connects the electrode assembly to an external power source and load, a vent that discharges internally generated gas, and a cap assembly including an electrolyte inlet.

Conventional secondary battery cells have a structure having one cell and one pair of terminals, and one case and related members are required for each pair of terminals, and thus when a secondary battery module or pack is produced, as the number of cells increases, the volume of the related members increase, resulting in a disadvantage of energy capacity loss. **In** addition, when a plurality of cells are arranged or stacked, the space occupancy of the cells increases due to a gap between the cells, and since the expansion (swelling) of the cells that occurs during charging and discharging occurs for each cell, it is difficult to suppress expansion strength.

The above information disclosed in this Background section is for enhancement of understanding of the background of the present disclosure, and therefore, it may contain information that does not constitute a related (or prior) art.

### SUMMARY

The present disclosure is directed to achieving a secondary battery having a one-cell multi-terminal structure.

A cell is independently formed by forming a partition wall in one case to form a plurality of independent spaces and inserting each electrode assembly into one independent space. It is possible to achieve a secondary battery of a new paradigm having a one-cell multi-terminal structure by connecting a terminal to the electrode assembly accommodated in a space separated by the partition wall.

According to one aspect of the present disclosure, there is provided a secondary battery, the secondary battery including a case including a plurality of independent spaces; a plurality of electrode assemblies, each of which is separately accommodated in one of the plurality of independent spaces; and a cap assembly including a cap plate, the cap plate being bonded to each of the plurality of electrode assemblies, wherein the cap assembly includes a plurality of terminals attached to the cap plate, the plurality of terminals electrically connected to the plurality electrode assemblies.

The plurality of electrode assemblies may be commonly bonded to a single cap plate.

The cap plate may include a plurality of cap plates, and each cap plate of the plurality of cap plates may be individually bonded to a separate one of the plurality of electrode assemblies.

The case may include a partition wall bonded to the case configured to define the plurality of independent spaces.

The case may include a partition wall formed integrally with the case configured to define the plurality of independent spaces.

The case may include a plurality of gas outlets each separately connected to one of the plurality of independent spaces.

The cap plate of the cap assembly may include a plurality of gas outlets each separately connected to one of the plurality of independent spaces.

The case may include a plurality of electrolyte inlets each separately connected to one of the plurality of independent spaces.

The cap plate of the cap assembly may include a plurality of electrolyte inlets each separately connected to one of the plurality of independent spaces.

The cap plate of the cap assembly may be welded to the case to seal the plurality of independent spaces.

According to another aspect, there is provided a method of manufacturing a secondary battery, the method including manufacturing a case including a plurality of independent spaces; manufacturing a plurality of electrode assemblies; manufacturing a cap plate; assembling a cap assembly by bonding the cap plate to each electrode assembly of the plurality of electrode assemblies and electrically connecting a terminal to each electrode assembly of the plurality of electrode assemblies; inserting each of the plurality of electrode assemblies bonded to the cap plate of the cap assembly into a separate independent space of the plurality of independent spaces; and welding the cap plate of the cap assembly to the case to seal the plurality of independent spaces.

The plurality of electrode assemblies may be commonly bonded to a single cap plate.

The cap plate may include a plurality of cap plates, and each cap plate of the plurality of cap plates may be individually bonded to a separate one of the plurality of electrode assemblies.

The manufacturing of the case may include separately manufacturing a partition wall defining the plurality of independent spaces and bonding the partition wall to the inside of the case.

The manufacturing of the case may include forming a partition wall defining the plurality of independent spaces integrally with the case.

The manufacturing of the case may include independently forming a plurality of gas outlets each separately connected to one of the plurality of independent spaces.

The manufacturing of the cap plate may include independently forming a plurality of gas outlets each at a position overlapping one of the plurality of independent spaces.

The manufacturing of the case may include independently forming a plurality of electrolyte inlets each separately connected to one of the plurality of independent spaces.

The manufacturing of the cap plate may include independently forming a plurality of electrolyte inlets each at a position overlapping one of the plurality of independent spaces.

The method according to some embodiments may further include injecting an electrolyte into each of the independent spaces of the case after the welding of the cap plate of the cap assembly to the case.

Aspects and features of the present disclosure are not limited to those described above, and other aspects and features not specifically mentioned herein will be clearly understood by those skilled in the art from the description of the present disclosure below.

At least some of the above and other features of the invention are set out in the claims.

### BRIEF DESCRIPTION OF THE DRAWINGS

Features will become apparent to those of skill in the art by describing in detail example embodiments with reference to the attached drawings in which:
FIG. 1 is a top perspective view of a comparative prismatic secondary battery to which the present disclosure can be applied;
FIG. 2 is a cross-sectional view along line I-I' of FIG. 1;
FIG. 3 is a cross-sectional view of a secondary battery having an internal structure different from that of FIG. 2;
FIG. 4A is an exploded perspective view of a secondary battery according to some embodiments of the present disclosure;
FIG. 4B shows a state in which each electrode assembly is separately accommodated in one of independent spaces of a case shown in FIG. 4A and a cap plate of a cap assembly is welded to seal the case;
FIG. 5A is an exploded perspective view of a secondary battery according to some other embodiments of the present disclosure;
FIG. 5B shows a state in which each electrode assembly is separately accommodated in each of independent spaces of a case shown in FIG. 5A and cap plates of the cap assembly are welded to seal the case;
FIG. 6 is a flowchart of a method of manufacturing a secondary battery according to some embodiments of the present disclosure;
FIGS. 7A to 7E show a process of manufacturing a secondary battery for each operation of FIG. 6;
FIG. 8 shows a swelling relief effect in the secondary battery according to the present disclosure;
FIG. 9 is an example view of a secondary battery module in which secondary batteries manufactured according to embodiments of the present disclosure are arranged;
FIG. 10 is an example view of a secondary battery module formed by arranging the secondary batteries manufactured according to the embodiments of the present disclosure;
FIG. 11 is an example view of a secondary battery pack including the secondary battery module shown in FIG. 10; and
FIG. 12 is a diagram showing the secondary battery pack shown in FIG. 11 installed in a vehicle.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that when a layer is referred to as being "under" another layer, it can be directly under, and one or more intervening layers may also be present. **In** addition, it will also be understood that when a layer is referred to as being "between" two layers, it can be the only layer between the two layers, or one or more intervening layers may also be present.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

**In** the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. **In** addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

**In** addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

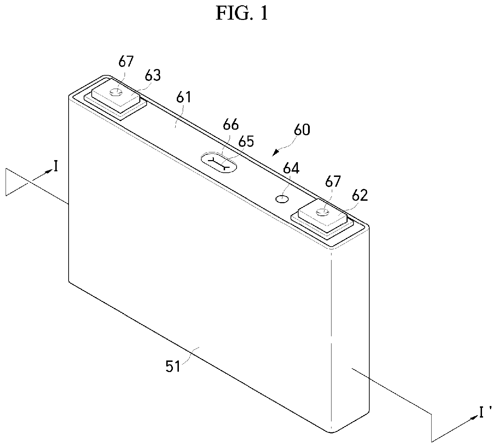

FIG. 1 is a top perspective view of a comparative prismatic secondary battery to which the present disclosure can be applied.

Referring to FIG. 1, a case 51 may define an overall appearance of the prismatic secondary battery, and may be made of a conductive metal, e.g., aluminum, aluminum alloy, or nickel-plated steel. In an implementation, the case 51 may provide a space for accommodating an electrode assembly therein.

A cap assembly 60 may include a cap plate 61 that may cover the opening of the case 51. In an implementation, the case 51 and the cap plate 61 may both be made of a conductive material. Here, a first terminal 62 and a second terminal 63 may be electrically connected to respective positive and negative (or negative and positive) electrodes inside the case 51 and may protrude outward through the cap plate 61.

The cap plate 61 may be equipped with an electrolyte injection port 64 including a sealing plug (or seal pin), and a vent 66 including a notch 65. The vent 66 may be configured to discharge gas generated inside the secondary battery.

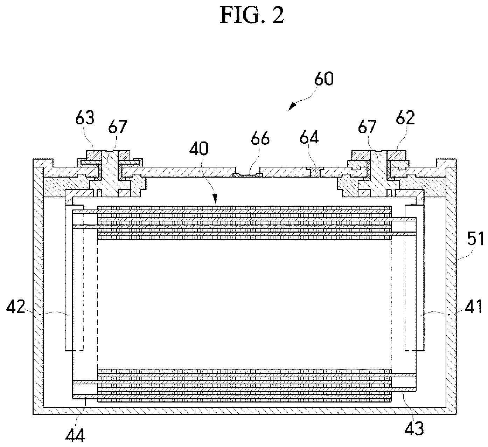

FIG. 2 is a cross-sectional view taken along the line I-I' of FIG. 1, according to some embodiments of the present disclosure. With reference to FIG. 2, the internal structure of the prismatic secondary battery and the coupling structure with the cap assembly 60 will be further described.

As shown in FIG. 2, a prismatic secondary battery may include an electrode assembly 40, a first current collector 41, a first terminal 62, a second current collector 42, a second terminal 63, a case 51, and a cap assembly 60.

An electrode assembly 40 may be formed by winding or stacking a stack of a first electrode plate, a separator, and a second electrode plate, which may be thin plates or films. If the electrode assembly 40 is a wound stack, a winding axis may be parallel to the longitudinal direction of the case 51. In some other embodiments, the electrode assembly 40 may be a stack type rather than a winding type. In an implementation, the electrode assembly 40 may be a Z-stack electrode assembly in which a positive electrode plate and a negative electrode plate may be inserted into both sides of a separator, which may be bent into a Z-stack. In an implementation, one or more electrode assemblies may be stacked such that long sides of the electrode assemblies are adjacent to each other and accommodated in the case 51. The first electrode plate of the electrode assembly may act as a negative electrode, and the second electrode plate may act as a positive electrode. In an implementation, the first electrode plate of the electrode assembly may act as a positive electrode, and the second electrode plate may act as a negative electrode.

The first electrode plate may include a first electrode active material, e.g., graphite, carbon, or the like, on a first electrode current collector including a metal foil, e.g., copper, a copper alloy, nickel, a nickel alloy, or the like. The first electrode plate may include a first electrode tab 43 (e.g., a first uncoated portion) that may be a region in which the first electrode active material is not present. The first electrode tab 43 may act as a current flow path between the first electrode plate and the first current collector 41. In some embodiments, when the first electrode plate is manufactured, the first electrode tab 43 may be formed by being cut in advance to protrude to one side of the electrode assembly 40, or the first electrode tab 43 may protrude to one side of the electrode assembly 40 more than (e.g., farther than or beyond) the separator without being separately cut.

The second electrode plate may include a second electrode active material, e.g., a transition metal oxide, on a second electrode current collector formed of a metal foil, e.g., aluminum or an aluminum alloy. The second electrode plate may include a second electrode tab 44 (e.g., a second uncoated portion) that may be a region in which the second electrode active material is not present. The second electrode tab 44 may act as a current flow path between the second electrode plate and the second current collector 42.

In some embodiments, the second electrode tab 44 may be formed by being cut in advance to protrude to the other side (e.g., the opposite side) of the electrode assembly as the first electrode tab 43 when the second electrode plate is manufactured, or the second electrode plate may protrude to the other side of the electrode assembly more than (e.g., farther than or beyond) the separator without being separately cut.

The separator may prevent or substantially reduce instances of a short circuit between the first electrode and the second electrode while allowing movement of lithium ions therebetween. The separator may be made of, e.g., a polyethylene film, a polypropylene film, a polyethylene-polypropylene film, or the like.

In some embodiments, the electrode assembly 40 may be accommodated in the case 51 along with an electrolyte.

In the electrode assembly 40, the first current collector 41 and the second current collector 42 may be welded and connected, e.g., electrically connected, to the first electrode tab 43 extending from the first electrode plate and the second electrode tab 44 extending from the second electrode plate, respectively. As mentioned above, in some embodiments in which the first electrode tab 43 and the second electrode tab 44 are located at the top of the electrode assembly 40, the first and second current collectors may be located at the top of the electrode assembly 40.

As illustrated in FIG. 2, the first current collector 41 and the second current collector 42 may be connected to the first terminal 62 and the second terminal 63 through connection members 67, respectively. In some embodiments, the connection members 67 may each have an outer peripheral surface that may be threaded and may be fastened to the first terminal 62 and the second terminal 63 by screwing. In an implementation, the connection members 67 may be coupled to the first terminal 62 and the second terminal 63, e.g., by riveting or welding.

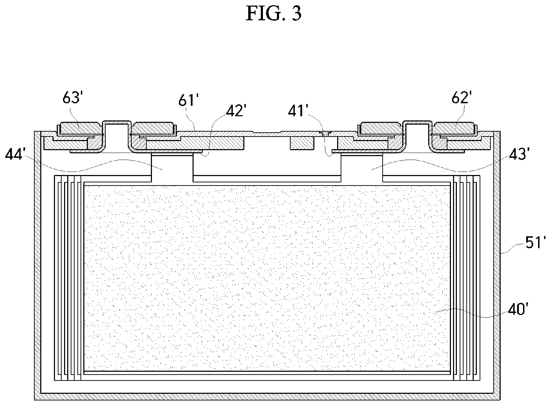

FIG. 3 is a cross-sectional view of a secondary battery having an internal structure different from that of FIG. 2. FIG. 3 shows a top-tab structure in which an electrode assembly 40' may include a first electrode tab 43' and a second electrode tab 44' positioned at an upper side of the secondary battery, unlike the case of FIG. 2. In addition, FIG. 3 shows a top-terminal structure in which a first terminal 62' and a second terminal 63' may be at an upper side.

The secondary battery having the top-tab top-terminal structure shown in FIG. 3 may have a structure in which the first electrode tab 43' and the second electrode tab 44' of the electrode assembly 40' may be at the upper side in a case 51'. Additionally, the first terminal 62' and the second terminal 63', to which a first current collection part 41' and a second current collection part 42'may be connected to, respectively, may be installed outside of a cap plate 61'. Other aspects of the top-tab top-terminal configuration shown in FIG. 3 may be similar to that of a secondary battery having a side-tab structure shown in FIG. 2.

The above-described secondary batteries basically have a structure in which one cell has one pair of terminals because the electrode assembly is accommodated in each case for one cell. Therefore, since one case and related members may be required for one pair of terminals, if a secondary battery module or pack is produced, the volumes of the related members may increase as the number of cells increases, resulting in a disadvantage of energy capacity loss.

In addition, as an arrangement distance of cells increases, when a module is formed, a distance between terminals may increase, and the above distance increases in module units, e.g., as the number module units increases, and thus when a busbar is connected, a connection distance of the busbar increases, which may result in increased cost and increased electrical resistance.

In addition, if a plurality of cells are arranged or stacked, a space occupancy may increase due to a gap set between cells, and thus the space utilization of applied products (e.g., a vehicle) of the module/pack may be reduced, and since the expansion (swelling) of the cells that may occur during discharge may occur for each cell, there may be a problem of accumulating expansion strength between the cells.

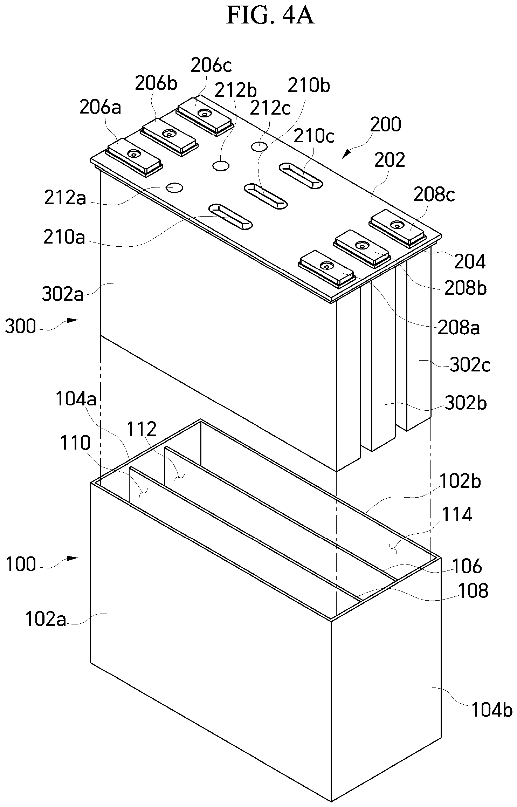

FIG. 4A is an exploded perspective view of a secondary battery according to some embodiments of the present disclosure.

Referring to FIG. 4A, a case 100 may include a plurality of independent spaces 110, 112, and 114 defined by partition walls 106 and 108. Here, an example of three independent spaces will be described. The partition walls 106 and 108 are preferably the same material as the case 100. To form the independent spaces 110, 112, and 114, the partition walls 106 and 108 may be manufactured separately from the case 100 and bonded to the case 100 by welding. In another embodiment, the partition walls 106 and 108 may be formed integrally, e.g., formed simultaneously and of the same material to define a monolithic and seamless single structure, with the case 100 by a pressing, casting, or drawing method.

Each one of electrode assemblies 302a to 302c of a plurality of electrode assemblies 300 may be separately accommodated in one of the independent spaces 110, 112, and 114 of the case 100.

Each of the electrode assemblies 302a to 302c may be bonded to a cap assembly 200 including one cap plate 202. The cap assembly 200 may include terminals 206a to 206c and 208a to 208c each attached to the cap plate 202 and, respectively, electrically connected to the electrode assemblies 302a to 302c. An insulating plate 204 may be under the cap plate 202.

In this way, in the embodiment of FIG. 4A, the cap plate 202 may be present and may be commonly bonded to each of the electrode assemblies 302a to 302c accommodated in the independent spaces 110, 112, and 114, respectively. For example, each of the electrode assemblies 302a to 302c may be bonded to one cap plate, i.e., the cap plate 202.

In some embodiments, the one cap plate 202 of the cap assembly 200 may include gas outlets 210a to 210c in (e.g., connected to) the independent spaces 110, 112, and 114, respectively. The gas outlets 210a to 210c are referred to as vents. For example, as may be seen FIG. 4A, the gas outlets 210a to 210c may be located on the cap plate 202 at positions that overlap, respectively, with independent spaces 110, 112, and 114.

In some other embodiments, the gas outlets 210a to 210c may be formed in (e.g., connected to) the independent spaces 110, 112, and 114, respectively, at a position of a portion of the case 100 other than the cap plate 202 (e.g., on a side surface of the case). For example, the gas outlets 210a to 210c may be located on a side surface of the case 100 at positions that overlap, respectively, with independent spaces 110, 112, and 114.

In some embodiments, the cap plate 202 of the cap assembly 200 may include electrolyte inlets 212a to 212c in (e.g., connected to) the independent spaces 110, 112, and 114, respectively. For example, the electrolyte inlets 212a to 212c may be located on the cap plate 202 at positions that overlap, respectively, with independent spaces 110, 112, and 114.

In some other embodiments, the electrolyte inlets 212a to 212c may be formed in (e.g., connected to) the independent spaces 110, 112, and 114, respectively, at a position of a portion of the case 100 other than the cap plate 202 (e.g., on the side surface of the case). For example, the electrolyte inlets 212a to 212c may be located on a side surface of the case 100 at positions that overlap, respectively, with the independent spaces 110, 112, and 114.

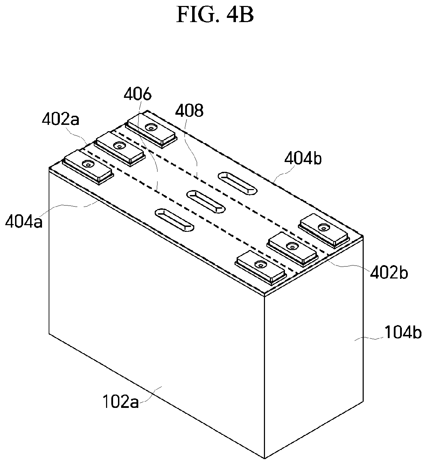

FIG. 4B shows a state in which each electrode assembly 302a to 302c may separately accommodated in one of the independent spaces 110, 112, and 114 of the case 100 shown in FIG. 4A and the cap plate 202 of the cap assembly 200 may be welded to the case 100.

Portions of the cap plate 202 of the cap assembly 200 may be welded to the case 100. For example, the cap plate 202 may be welded to, e.g., a contact side 402a of a narrow surface 104a (shown in FIG. 4A) of the case 100, a contact side 402b of the other narrow surface 104b of the case 100, a contact side 404a of one wide surface 102a of the case 100, and a contact side 404b of the other wide surface 102b of the case 100. Additionally, corresponding portion 406, which may be on the partition wall 106, and corresponding portion 408, which may be on the partition wall 108, may be welded to the partition wall 106 and the partition wall 108, respectively.

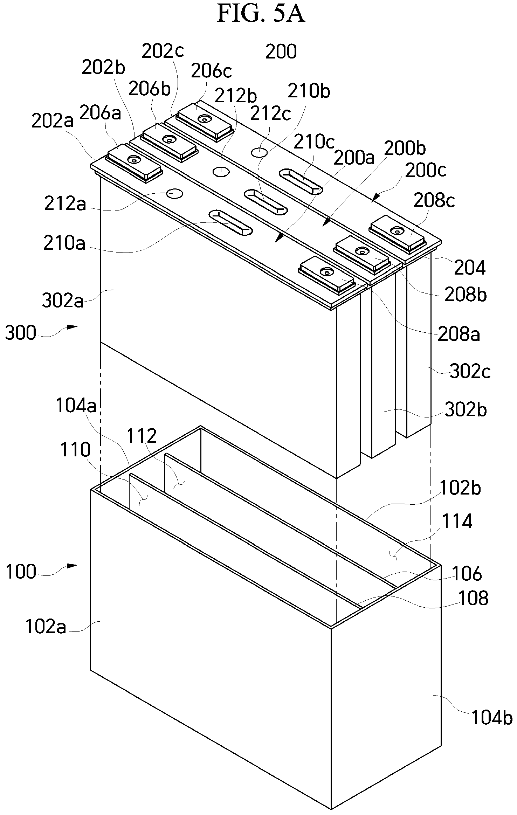

FIG. 5A is an exploded perspective view of a secondary battery according to some other embodiments of the present disclosure.

Referring to FIG. 5A, the case 100 may include the plurality of independent spaces 110, 112, and 114 defined by the partition walls 106 and 108. Here, an example of three independent spaces will be described. The partition walls 106 and 108 may be formed of the same material as the case 100. In an implementation, the partition walls 106 and 108, defining the independent spaces 110, 112, and 114, may be manufactured separately from the case 100 and bonded to the case 100 by welding. In another implementation, the partition walls 106 and 108 may be formed integrally with the case 100 by a pressing, casting, or drawing method.

Each of the electrode assemblies 302a to 302c of the plurality of electrode assemblies 300 may be separately accommodated in one of the independent spaces 110, 112, and 114 of the case 100.

Each one of electrode assemblies 302a to 302c may be bonded to one of individual cap assemblies 200a to 200c including individual cap plates 202a to 202c. The individual cap assemblies 200a to 200c may include the terminals 206a to 206c and 208a to 208c, respectively, attached to the individual cap plates 202a to 202c and electrically connected to the electrode assemblies 302a to 302c.

In this way, in the embodiment of FIG. 5A, three individual cap plates 202a to 202c may be present, and each of the individual cap plates 202a to 202c of the individual cap assemblies 200a to 200c may be bonded to one of the electrode assemblies 300 accommodated in one of the independent spaces 110, 112, and 114.

In some embodiments, the individual cap plates 202a to 202c of the individual cap assemblies 200a to 200c may include the gas outlets 210a to 210c in (e.g., connected to) the independent spaces 110, 112, and 114, respectively. For example, as may be seen FIG. 5A, the gas outlets 210a to 210c may be located on respective individual cap plates 202a to 202c at positions that overlap, respectively, with independent spaces 110, 112, and 114.

In some other embodiments, the gas outlets 210a to 210c may be formed in (e.g., connected to) the independent spaces 110, 112, and 114, respectively, at a position of a portion of the case 100 other than the individual cap plates 202a to 202c (e.g., on a side surface of the case). For example, as may be seen FIG. 5A, the gas outlets 210a to 210c may be located on a side surface of the case 100 at positions that overlap, respectively, with independent spaces 110, 112, and 114.

In some embodiments, the individual cap plates 202a to 202c of the individual cap assemblies 200a to 200c may each include electrolyte inlets 212a to 212c in (e.g., connected to) the independent spaces 110, 112, and 114, respectively. For example, as may be seen FIG. 5A, the electrolyte inlets 212a to 212c may be located on respective individual cap plates 202a to 202c at positions that overlap, respectively, with independent spaces 110, 112, and 114.

In some other embodiments, the electrolyte inlets 212a to 212c may be formed in (e.g., connected to) the independent spaces 110, 112, and 114, respectively, at a position of a portion of the case 100 other than the individual cap plates 202a to 202c (e.g., on the side surface of the case). For example, as may be seen FIG. 5A, the electrolyte inlets 212a to 212c may be located on a side surface of the case 100 at positions that overlap, respectively, with the independent spaces 110, 112, and 114.

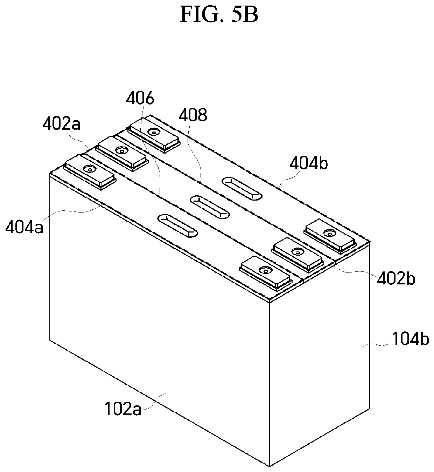

FIG. 5B shows a state in which each electrode assembly may be separately accommodated in one of the independent spaces 110, 112, and 114 of the case 100 shown in FIG. 5A and individual cap plates 202a to 202c of the individual cap assemblies 200a to 200c are welded to the case 100.

Portions of the individual cap plates 202a to 202c of the individual cap assemblies 200 may be welded to the case 100. For example, each one of individual cap plates 202a to 202c may be welded to, e.g., the contact side 402a of one narrow surface 104a (shown in FIG. 5A) of the case 100, the contact side 402b of the other narrow surface 104b of the case 100, the contact side 404a of one wide surface 102a of the case 100, and the contact side 404b of the other wide surface 102b of the case 100. Additionally, corresponding portion 406, which may be on the internal partition wall 106, and the corresponding portion 408, which may be on the internal partition wall 108, may be welded to the internal partition wall 106 and the internal partition wall 108, respectively.

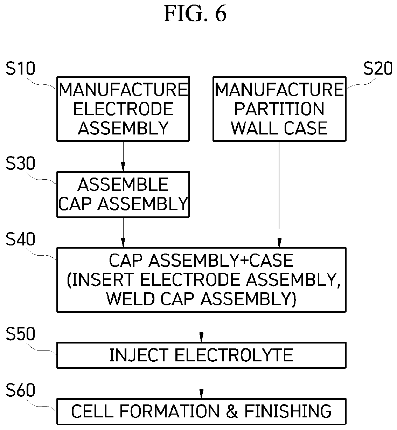

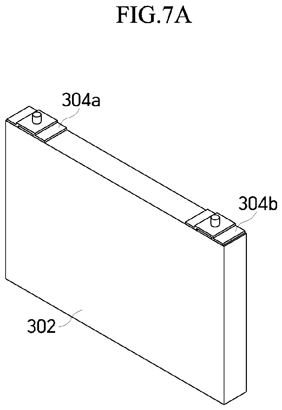

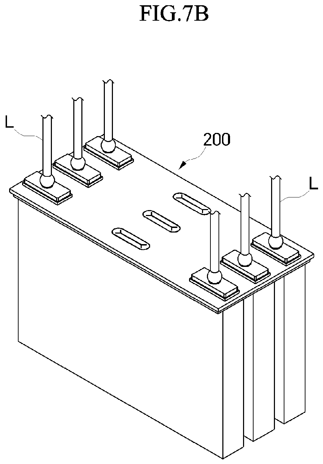

FIG. 6 is a flowchart of a method of manufacturing a secondary battery according to some embodiments of the present disclosure. In addition, FIGS. 7A to 7E show a process of manufacturing a secondary battery for each operation of FIG. 6.

The method of manufacturing a secondary battery will be briefly described with reference to FIGS. 6 and 7A to 7E.

S10: Manufacturing a plurality of electrode assemblies each accommodated in the independent spaces of the case. Each electrode assembly may be a winding type or stack type electrode assembly. FIG. 7A shows current collectors 304a and 304b welded to an electrode tab of an electrode assembly 302.

S20: Manufacturing a case including a plurality of independent spaces. The manufactured case may be similar to those described in FIGS. 4A to 5B.

S30: Assembling a cap plate by manufacturing the cap plate that will be bonded to each of the plurality of electrode assemblies, bonding the cap plate to each electrode assembly, and connecting a terminal to each electrode assembly. Here, the cap assembly may also be a common assembly of FIG. 4A or the individual cap assembly of FIG. 5A.

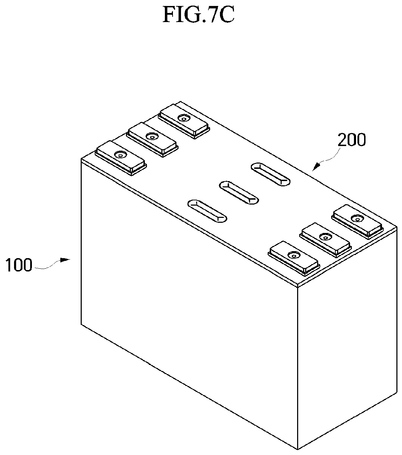

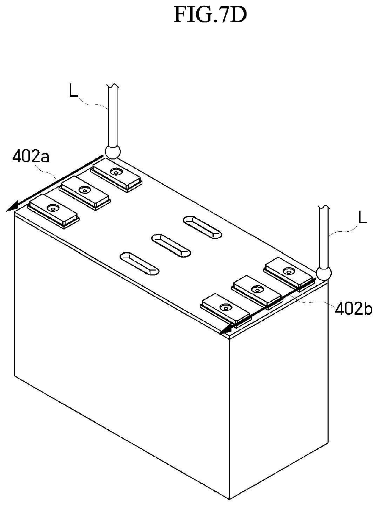

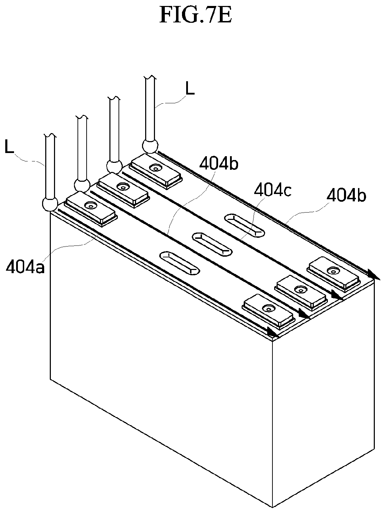

S40: Inserting each electrode assembly bonded to the cap plate of the cap assembly into an independent space of the case (see FIG. 7C) and welding the cap plate of the cap assembly to the case to seal the plurality of independent spaces (see FIGS. 7D and 7E). FIGS. 7D and 7E show the case and the cap plate being welded using a laser welder L.

S50: Injecting an electrolyte into each independent space and impregnating the electrode assembly with the electrolyte.

S60: A chemical conversion operation of activating and chemically aging the assembled secondary battery while charging and discharging.

In some embodiments of the method of manufacturing a secondary battery of the present disclosure, the cap plate of the cap assembly may be commonly bonded to the plurality of electrode assemblies each accommodated in one of the independent spaces. In other embodiments, individual cap plates of individual cap assemblies may be bonded to each one of the electrode assemblies accommodated in each of the independent spaces.

In some embodiments, the manufacturing of the case may include installing a partition wall defining the plurality of independent spaces inside the case. Here, the partition wall may be manufactured separately from the case, as described above, and bonded to the case by welding, or formed integrally with the case by a pressing, casting, or drawing method.

In some embodiments, the manufacturing of the case may include individually forming a gas outlet for each of the independent spaces.

In some embodiments, the manufacturing of the cap plate may include individually forming a gas outlet at a position corresponding to each of the independent spaces.

In some embodiments, the manufacturing of the case may include individually forming an electrolyte inlet for each of the independent spaces.

In some embodiments, the manufacturing of the cap plate may include individually forming an electrolyte inlet at a position corresponding to each of the independent spaces.

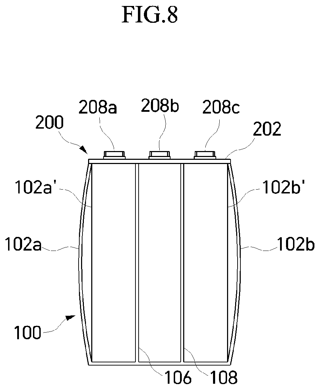

FIG. 8 shows a swelling relief effect in the secondary battery according to the present disclosure.

If the cells expand due to charging and discharging in the secondary battery module and pack according to the present disclosure, the expansion strength between the cells separated by the partition walls 106 and 108 in one case 100 may be internally absorbed in the case 100, and thus only surfaces 102a and 102b of the outermost cells may swell slightly outward due to the expansion strength and the expansion of the entire module/pack may be relieved.

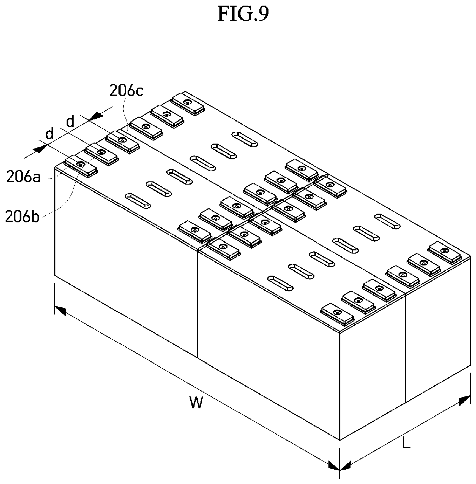

FIG. 9 is an example view of a secondary battery module in which secondary batteries manufactured according to embodiments of the present disclosure are arranged. With the high capacity of secondary batteries for driving electric vehicles or the like, a secondary battery module may be manufactured by arranging and connecting a plurality of secondary battery cells in a transverse direction and/or a longitudinal direction. The number of and arrangement direction of the secondary batteries to be arranged may be designed to obtain the desired voltage and current specifications.

The conventional secondary battery cell may have a structure having one cell and one pair of terminals, and one case and related members may be required for each pair of terminals, and thus if a secondary battery module or pack is produced, as the number of cells increases, the volume of the related members may increase, resulting in a disadvantage of energy capacity loss. However, according to the present disclosure, as shown in FIG. 9, an arrangement distance of the cell in the longitudinal direction L can be significantly reduced. However, the arrangement distance in the width direction W may not be reduced. This is because distances d between terminals 206a, 206b, and 206c may be decreased. Therefore, even if a gap is set between cells, the entire module can be made compact.

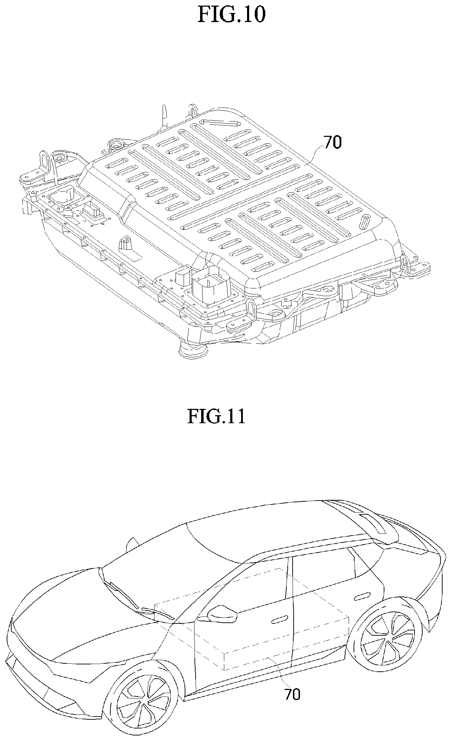

FIG. 10 is a perspective view of a battery pack 70 according to embodiments of the present disclosure. Referring to FIG. 10, the battery pack 70 may include an assembly to which individual batteries are electrically connected and a pack housing accommodating the same.

The battery pack may be mounted on (or in) a vehicle. The vehicle may be, e.g., an electric vehicle, a hybrid vehicle, or a plug-in hybrid vehicle. The vehicle may be a four-wheeled vehicle or a two-wheeled vehicle.

FIG. 11 is a view for describing a vehicle including the battery pack shown in FIG. 10. FIG. 11 shows a vehicle that includes the battery pack shown in FIG. 10 on the lower body thereof. The vehicle may operate by (e.g., may be powered by) receiving power from the battery pack 70.

Hereinafter, suitable materials that may be usable for the secondary battery according to embodiments of the present disclosure will be described.

As the positive electrode active material, a compound, e.g., capable of reversibly intercalating/deintercalating lithium (e.g., a lithiated intercalation compound) may be used. In an implementation, a composite oxide of, e.g., lithium and cobalt, manganese, nickel, or combinations thereof may be used.

The composite oxide may be a lithium transition metal composite oxide and may include, e.g., a lithium nickel oxide, a lithium cobalt oxide, a lithium manganese oxide, a lithium iron phosphate compound, a cobalt-free nickel-manganese oxide, or a combination thereof.

In an implementation, a compound represented by one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L1_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐNm_{1-b}G_{b}O₂

(0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A may be, e.g., Ni, Co, Mn, or a combination thereof; X may be, e.g., Al, Ni, Co, Mn, Cr, Fe, Mg, Sr, V, a rare earth element, or a combination thereof; D may be, e.g., O, F, S, P, or a combination thereof; G may be, e.g., Al, Cr, Mn, Fe, Mg, La, Ce, Sr, V, or a combination thereof; and L1 may be, e.g., Mn, Al, or a combination thereof.

A positive electrode for a lithium secondary battery may include, e.g., a substrate and a positive electrode active material layer formed on the substrate. The positive electrode active material layer may include, e.g., a positive electrode active material and may further include a binder and/or a conductive material.

The content of the positive electrode active material may be, e.g., in a range of about 90 wt% to about 99.5 wt%, based on 100 wt% of the positive electrode active material layer, and the content of the binder and the conductive material may each be, e.g., in a range of about 0.5 wt% to about 5 wt%, based on 100 wt% of the positive electrode active material layer.

The substrate may be, e.g., aluminum (Al).

The negative electrode active material may include, e.g., a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be, e.g., a carbon-based negative electrode active material, which may include, e.g., crystalline carbon, amorphous carbon, or a combination thereof. Examples of the crystalline carbon may include graphite, e.g., natural graphite or artificial graphite, and examples of the amorphous carbon may include, e.g., soft carbon, hard carbon, a pitch carbide, a meso-phase pitch carbide, sintered coke, or the like.

A Si-based negative electrode active material or a Sn-based negative electrode active material may be used as the material capable of being doped and undoped with lithium. The Si-based negative electrode active material may be, e.g., silicon, a silicon-carbon composite, SiOₓ (0 < x < 2), a Si-based alloy, or a combination thereof.

The silicon-carbon composite may be, e.g., a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. In an implementation, the silicon-carbon composite may include, e.g., a core including crystalline carbon and silicon particle and an amorphous carbon coating layer on the surface of the core.

A negative electrode for a lithium secondary battery may include, e.g., a substrate and a negative electrode active material layer on the substrate. The negative electrode active material layer may include, e.g., a negative electrode active material and may further include a binder and/or a conductive material.

In an implementation, the negative electrode active material layer may include, e.g., about 90 wt % to about 99 wt % of a negative electrode active material, about 0.5 wt % to about 5 wt % of a binder, and about 0 wt % to about 5 wt % of a conductive material, based on 100 wt% of the negative electrode active material layer.

In an implementation, a non-aqueous binder, an aqueous binder, a dry binder, or a combination thereof may be used as the binder. If an aqueous binder is used as the negative electrode binder, a cellulose-based compound capable of imparting viscosity may be further included.

As the negative electrode substrate, e.g., copper foil, nickel foil, stainless steel foil, titanium foil, nickel foam, copper foam, conductive metal-coated polymer substrate, or combinations thereof may be used.

An electrolyte for a lithium secondary battery may include, e.g., a non-aqueous organic solvent and a lithium salt.

The non-aqueous organic solvent may act as a medium through which ions involved in the electrochemical reaction of the battery can move.

The non-aqueous organic solvent may be, e.g., a carbonate-based, an ester-based, an ether-based, a ketone-based, an alcohol-based solvent, an aprotic solvent, and may be used alone or in combination of two or more.

In an implementation, if a carbonate solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, e.g., polyethylene, polypropylene, polyvinylidene fluoride, or a multilayer film including two or more layers thereof may be used.

The separator may include, e.g., a porous substrate and a coating layer including an organic material, an inorganic material, or a combination thereof on one or both surfaces of the porous substrate.

The organic material may include, e.g., a polyvinylidene fluoride-based polymer or a (meth)acrylic polymer.

The inorganic material may include inorganic particles, e.g., Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or combinations thereof.

The organic material and the inorganic material may be, e.g., mixed in one coating layer or may be in the form of a coating layer including (or containing) an organic material and a coating layer including (or containing) an inorganic material that are stacked on each other.

According to the present disclosure, by forming partition walls in a single case to form a plurality of independent spaces and inserting electrode assemblies into each independent space to independently form a cell, e.g., by forming three cells in a single case, it may be possible to save space.

In an implementation, if cell expansion occurs due to charging and discharging in a module or pack, since expansion between cells separated by partition walls in a case may be absorbed in the case, only expansion in outermost cells may be revealed to the outside, thereby relieving the expansion of the entire module/pack.

Although the present disclosure has been described above with respect to embodiments thereof, the present disclosure is not limited thereto. Various modifications and variations can be made thereto by those skilled in the art within the scope of the present disclosure as defined by the appended claims and their equivalents.

## Claims

1. A secondary battery, the secondary battery comprising:
a case including a plurality of independent spaces;
a plurality of electrode assemblies, each of which is separately accommodated in one of the plurality of independent spaces; and
a cap assembly including a cap plate, the cap plate being bonded to each of the plurality of electrode assemblies,
wherein the cap assembly includes a plurality of terminals attached to the cap plate, the plurality of terminals electrically connected to the plurality electrode assemblies.

2. The secondary battery as claimed in claim 1, wherein the plurality of electrode assemblies is commonly bonded to a single cap plate.

3. The secondary battery as claimed in claim 1, wherein:
the cap plate includes a plurality of cap plates, and
each cap plate of the plurality of cap plates is individually bonded to a separate one of the plurality of electrode assemblies.

4. The secondary battery as claimed in claim 1, 2 or 3, wherein the case includes a plurality of gas outlets each separately connected to one of the plurality of independent spaces.

5. The secondary battery as claimed in any preceding claim, wherein the cap plate of the cap assembly includes a plurality of gas outlets each separately connected to one of the plurality of independent spaces.

6. The secondary battery as claimed in any preceding claim, wherein the case includes a plurality of electrolyte inlets each separately connected to one of the plurality of independent spaces.

7. The secondary battery as claimed in any preceding claim, wherein the cap plate of the cap assembly includes a plurality of electrolyte inlets each separately connected to one of the plurality of independent spaces.

8. The secondary battery as claimed in any preceding claim, wherein the cap plate of the cap assembly is welded to the case to seal the plurality of independent spaces.

9. A method of manufacturing a secondary battery, the method comprising:
manufacturing a case including a plurality of independent spaces;
manufacturing a plurality of electrode assemblies;
manufacturing a cap plate;
assembling a cap assembly by bonding the cap plate to each electrode assembly of the plurality of electrode assemblies and electrically connecting a terminal to each electrode assembly of the plurality of electrode assemblies;
inserting each of the plurality of electrode assemblies bonded to the cap plate of the cap assembly into a separate independent space of the plurality of independent spaces; and
welding the cap plate of the cap assembly to the case to seal the plurality of independent spaces.

10. The method as claimed in claim 9, wherein the plurality of electrode assemblies is commonly bonded to a single cap plate.

11. The method as claimed in claim 9 or 10, wherein:
the cap plate includes a plurality of cap plates, and
each cap plate of the plurality of cap plates is individually bonded to a separate one of the plurality of electrode assemblies.

12. The method as claimed in claim 9, 10 or 11, wherein the manufacturing of the case includes independently forming a plurality of gas outlets each separately connected to one of the plurality of independent spaces.

13. The method as claimed in any one of claims 9 to 12, wherein the manufacturing of the cap plate includes independently forming a plurality of gas outlets each at a position overlapping one of the plurality of independent spaces.

14. The method as claimed in any one of claims 9 to 13, wherein the manufacturing of the case includes independently forming a plurality of electrolyte inlets each separately connected to one of the plurality of independent spaces.

15. The method as claimed in any one of claims 9 to 14, wherein the manufacturing of the cap plate includes independently forming a plurality of electrolyte inlets each at a position overlapping one of the plurality of independent spaces.
